# EUROPEAN PATENT APPLICATION

(11) **EP 4 813 205 A1**
(43) Date of publication of application: **30.09.2026**
(21) Application number: 24893821.9
(22) Date of filing: 30.08.2024
(51) Int. Cl.: A01K 41/00

(54) **INCUBATION DEVICE**

(30) Priority: 20.11.2023 JP 2023196466
(71) Applicant: Nabel Co., Ltd., Kyoto-shi, Kyoto 601-8444 (JP)
(72) Inventor: NAMBU, Takahiko, Kyoto-shi, Kyoto 601-8444 (JP); MATSUDA, Mitsuhiro, Tokushima-shi, Tokushima 779-3126 (JP)
(74) Representative: Müller Hoffmann & Partner
(86) International application number: PCT/JP2024/031249
(87) International publication number: WO 2025/109826

(57) **Abstract**

The present invention reduces a temperature difference in a casing caused by installation positions of trays, heat generated by eggs being incubated, and the like, thereby making the temperature in the casing more uniform, and includes a casing 2 configured to accommodate a plurality of trays 10 accommodating fertilized eggs, a blower fan 31 provided in the casing 2, and a fan control unit 6 configured to change an airflow direction in an air flow path by switching the blower fan 31 between forward rotation and reverse rotation.

## Description

### Technical Field

The present invention relates to an incubator.

### Background Art

As disclosed in Patent Literature 1, for example, a conventional incubator accommodates a plurality of trolley units in a casing, a blower is provided in an air flow path between the plurality of trolley units, and the blower blows air from an upper portion toward a lower portion of the trolley units. Further, in the incubator, a partition wall panel is provided on a side surface of the trolley unit on the blower side so that air blown by the blower does not enter the trolley unit from the side surface.

However, in the above incubator, the airflow direction in the trolley unit is always the same, from an upper side toward a lower side. Therefore, a temperature difference occurs in the up-and-down direction in the trolley unit. In particular, since eggs being incubated generate heat due to the growth of embryos, eggs being incubated in the upper portion of the trolley unit are preferentially cooled, whereas eggs being incubated in the lower portion are less likely to be cooled, thereby increasing the temperature difference in the up-and-down direction.

### Citation List

### Patent Literature

Patent Literature 1: JP 2013-255431 A

### Summary of Invention

### Technical Problem

Accordingly, the present invention has been made in view of the above problems, and an object of the present invention is to reduce the temperature difference in the casing caused by the installation positions of trays, heat generated by eggs being incubated, and the like, thereby making the temperature in the casing more uniform.

### Solution to Problem

That is, an incubator according to the present invention includes a casing configured to accommodate a plurality of trays accommodating fertilized eggs, a blower fan provided in the casing, and a fan control unit configured to change an airflow direction in an air flow path by switching the blower fan between forward rotation and reverse rotation.

In this incubator, by changing the rotation direction of the blower fan by the fan control unit to change the airflow direction in the air flow path, it is possible to reduce the temperature difference in the casing caused by the installation positions of the trays, heat generated by eggs being incubated, and the like, thereby making the temperature in the casing more uniform. As a result, the timing at which fertilized eggs hatch in the incubator can be synchronized, and work efficiency can be improved.

It is desirable that the incubator of the present invention further include a plurality of temperature sensors provided in the casing, and that the fan control unit switch the blower fan between forward rotation and reverse rotation based on temperatures detected by the temperature sensors.

In this configuration, by using temperatures detected by the plurality of temperature sensors, it is possible to reduce the temperature difference in the casing caused by the installation positions of trays, heat generated by eggs being incubated, and the like, thereby making the temperature in the casing more uniform.

In the casing, a temperature difference is likely to occur on upstream and downstream sides of the air flow path of the blower fan. Therefore, it is desirable that the plurality of temperature sensors include sensors provided at least two locations on the upstream and downstream sides of the air flow path when the blower fan is rotated forward.

In this configuration, the temperature difference between the upstream and downstream sides of the air flow path can be effectively eliminated by providing the temperature sensors at at least two locations on the upstream and downstream sides of the air flow path and switching the blower fan between forward rotation and reverse rotation.

As a specific control mode of the fan control unit, it is desirable that the fan control unit switch the blower fan between forward rotation and reverse rotation based on a difference between temperatures detected by the plurality of temperature sensors.

In this configuration, control can be performed so as to reduce the difference between temperatures detected by the plurality of temperature sensors. Therefore, the temperature difference in the casing can be reduced, thereby making the temperature in the casing more uniform.

### Advantageous Effects of Invention

According to the present invention configured as described above, the temperature difference in the casing caused by the installation positions of trays, heat generated by eggs being incubated, and the like, can be reduced, thereby making the temperature in the casing more uniform.

### Brief Description of Drawings

FIG. 1 is a schematic front view showing a configuration of an incubator according to an embodiment of the present invention.
FIG. 2 is a schematic diagram showing, in the embodiment, a state in which the blower fan rotates forward, and a magnitude relationship among average temperatures of the respective temperature sensors.
FIG. 3 is a schematic diagram showing, in the embodiment, a state in which the blower fan rotates in reverse and a magnitude relationship among average temperatures of the respective temperature sensors.

### Description of Embodiments

Hereinafter, an embodiment of an incubator using a trolley according to the present invention will be described with reference to the drawings. It should be noted that, in any of the drawings shown below, portions are schematically omitted or exaggerated as appropriate for ease of understanding. The same components are denoted by the same reference numerals, and descriptions thereof are omitted as appropriate.

### <Configuration of incubator 100>

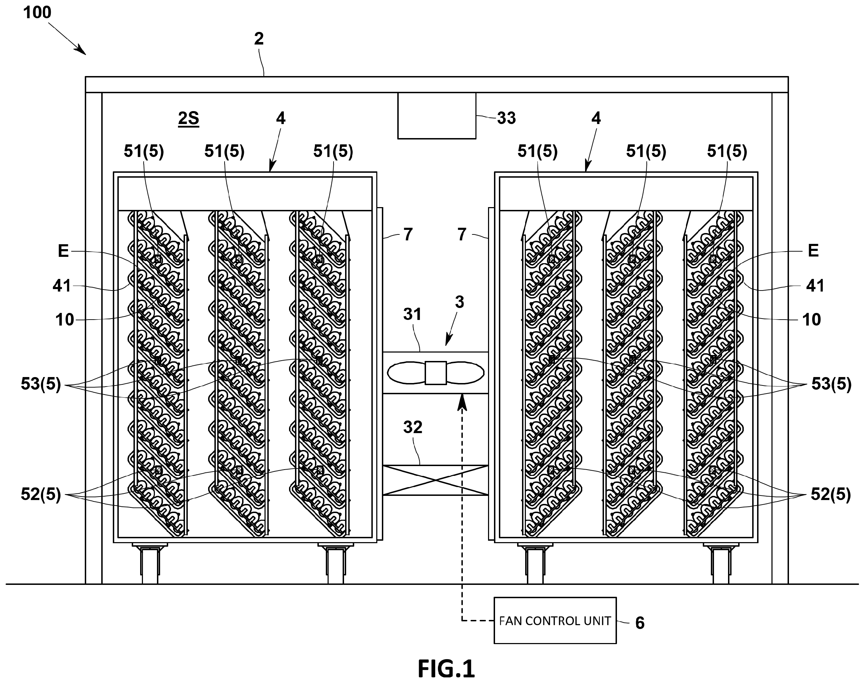

As shown in FIG. 1, the incubator 100 according to the present embodiment includes a casing 2 having an incubation chamber 2S formed therein, an air conditioning equipment 3 configured to perform air conditioning in the incubation chamber 2S, and a trolley 4 provided in the incubation chamber 2S.

The casing 2 includes the incubation chamber 2S accommodating a plurality of trays 10 in which fertilized eggs E are accommodated, and in the present embodiment, one or more trolleys 4 on which the plurality of trays 10 are set are provided in the incubation chamber 2S. In the present embodiment, an example in which two trolleys 4 are provided in the incubation chamber 2S is shown, however, the number of trolleys 4 provided in the incubation chamber 2S is not limited to two and may be one or more.

The air conditioning equipment 3 is configured to perform air conditioning in the incubation chamber 2S, and to adjust the environment in the incubation chamber 2S to one suitable for hatching of the fertilized eggs E. The air conditioning equipment 3 is configured to adjust temperature, humidity, or the like, and includes, for example, a blower fan 31 or a cooler 32. Here, the blower fan 31 is configured to be switchable between forward rotation and reverse rotation, and is controlled by a fan control unit 6 described later. The air conditioning equipment 3 may include a heater 33 or the like.

The air conditioning equipment 3 of the present embodiment is provided between the two trolleys 4 in the incubation chamber 2S. In FIG. 1, the blower fan 31 is provided in the upper portion between the two trolleys 4, and the cooler 32 is provided in the lower portion, but the arrangement thereof may be reversed. A plurality of blower fans 31 are arranged in the depth direction between the two trolleys 4.

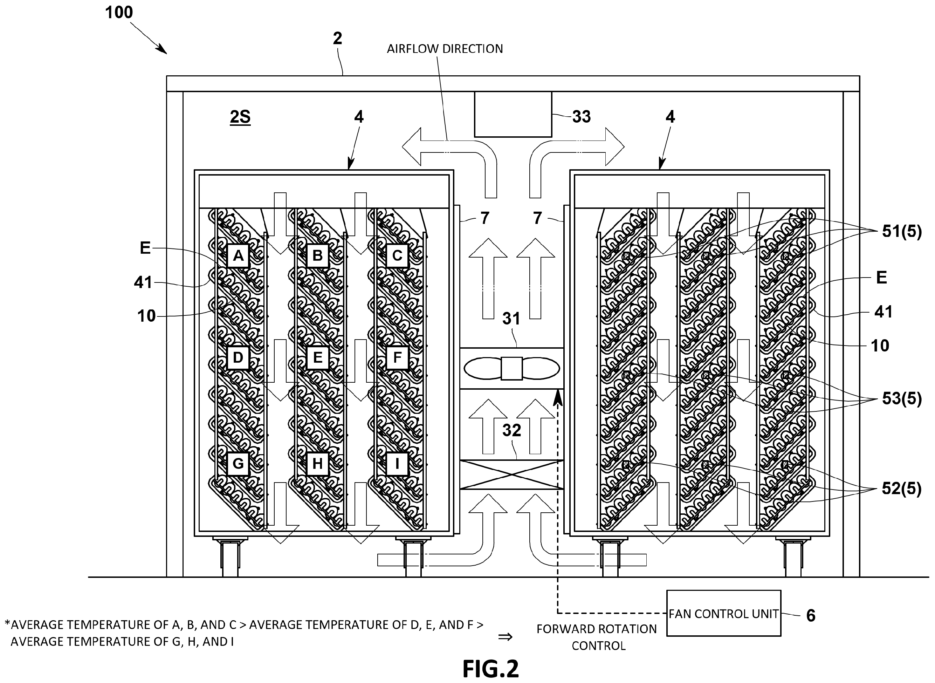

As shown in FIG. 2, the trolley 4 accommodates a plurality of trays 10 along the up-and-down direction, on which the plurality of trays 10 are mounted, and tilts the plurality of trays 10 to turn the fertilized eggs E accommodated therein.

For example, the trolley 4 includes a plurality of tray mounting portions 41 arranged along the up-and-down direction. In the present embodiment, the plurality of tray mounting portions 41 arranged along the up-and-down direction are provided in three columns on the left and right. In one trolley 4, the plurality of tray mounting portions 41 are not limited to being arranged in three columns, and may be arranged in one or more columns. In the trolley 4, the plurality of tray mounting portions 41 are configured to be inclined between a first inclined state inclined to one side and a second inclined state inclined to the other side, thereby turning the fertilized eggs E in the trays 10 mounted on the tray mounting portions 41.

The trolley 4 is provided with a plurality of temperature sensors 5 at a plurality of locations for measuring the temperature of the fertilized eggs E. For example, the plurality of temperature sensors 5 include sensors provided at at least two locations on the upstream and downstream sides of the air flow path when the blower fan 31 is rotated forward. The plurality of temperature sensors 5 may be configured to contact the eggshells of the fertilized eggs E and measure the eggshell temperature, or may be configured to measure the environmental temperature around the fertilized eggs E as the temperature thereof. The temperature sensor 5 may be provided on the tray 10, on the tray mounting portion 41, on the frame of the trolley 4, or in the casing 2.

In the present embodiment, the plurality of temperature sensors 5 include an upper temperature sensor 51 provided in an upper portion of the trolley 4 and a lower temperature sensor 52 provided in a lower portion of the trolley 4. Furthermore, in the present embodiment, the plurality of temperature sensors 5 include a central temperature sensor 53 provided at a central portion of the trolley 4 in the up-down direction, in addition to the upper temperature sensor 51 and the lower temperature sensor 52. The temperature sensors 51 to 53 may be provided in each of the plurality of trolleys 4, or the temperature sensors 51 to 53 may be provided in at least one of the plurality of trolleys 4.

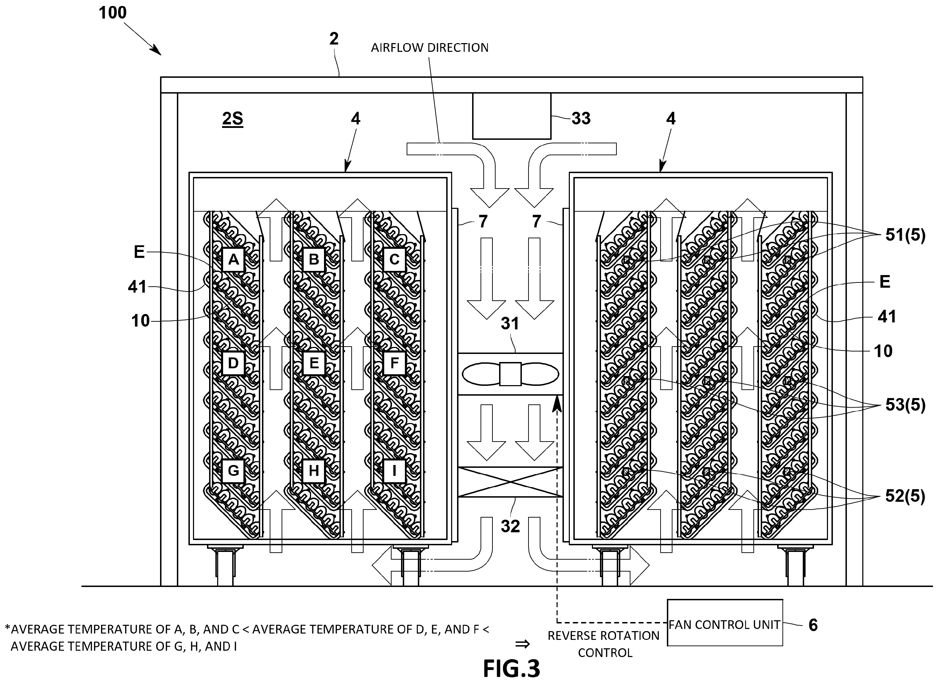

Then, the fan control unit 6 is configured to change the airflow direction in the air flow path by switching the blower fan 31 between forward rotation and reverse rotation. For example, the fan control unit 6 is configured to switch the plurality of blower fans 31 between forward rotation and reverse rotation based on the temperatures detected by the plurality of temperature sensors 51 to 53. In the present embodiment, as shown in FIG. 2, air is blown from an upper side toward a lower side of the trolley 4 by rotating the blower fan 31 forward. On the other hand, as shown in FIG. 3, air is blown from a lower side toward an upper side of the trolley 4 by rotating the blower fan 31 in reverse.

Here, the partition wall panel 7 may be provided between the blower fan 31 and a side surface of the trolley 4 on the blower fan 31 side so as to prevent air from entering or exiting through the side surface of the trolley 4 regardless of the blowing direction of the blower fan 31.

For example, the fan control unit 6 is configured to switch the plurality of blower fans 31 between forward rotation and reverse rotation based on the magnitude relationship among the temperature detected by the upper temperature sensor 51, the temperature detected by the central temperature sensor 53, and the temperature detected by the lower temperature sensor 52. That is, when the magnitude relationship among the temperature detected by the upper temperature sensor 51, the temperature detected by the central temperature sensor 53, and the temperature detected by the lower temperature sensor 52 satisfies a predetermined switching condition, the fan control unit 6 switches the plurality of blower fans 31 between forward rotation and reverse rotation.

In the present embodiment, a plurality of upper temperature sensors 51, a plurality of central temperature sensors 53, and a plurality of lower temperature sensors 52 are provided, respectively. Therefore, when the magnitude relationship among the average of the temperatures detected by the plurality of upper temperature sensors 51 (upper average temperature), the average of the temperatures detected by the plurality of central temperature sensors 53 (central average temperature), and the average of the temperatures detected by the plurality of lower temperature sensors 52 (lower average temperature) satisfies a predetermined switching condition, the fan control unit 6 switches the plurality of blower fans 31 between forward rotation and reverse rotation.

Here, when the temperature sensors 51 to 53 are provided in the plurality of trolleys 4, the fan control unit 6 may determine an upper average temperature, a central average temperature, and a lower average temperature for the plurality of trolleys 4 as a whole, and may switch the plurality of blower fans 31 between forward rotation and reverse rotation when the magnitude relationship among the upper average temperature, the central average temperature, and the lower average temperature satisfies a predetermined switching condition.

The fan control unit 6 may also determine the upper average temperature, the central average temperature, and the lower average temperature for each of the trolleys 4, and may switch the plurality of blower fans 31 between forward rotation and reverse rotation when the magnitude relationship among the upper average temperature, the central average temperature, and the lower average temperature in any one of the trolleys 4 satisfies a predetermined switching condition.

As shown in FIGS. 2 and 3, a specific control operation of the fan control unit 6 will be described in a case in which the plurality of upper temperature sensors 51 are denoted by A, B, and C, the plurality of central temperature sensors 53 are denoted by D, E, and F, and the plurality of lower temperature sensors 52 are denoted by G, H, and I.

As shown in FIG. 2, when the average temperature of A, B, and C > the average temperature of D, E, and F > the average temperature of G, H, and I, the fan control unit 6 is configured to rotate the blower fan 31 forward to blow air from an upper side toward a lower side of the trolley 4.

As shown in FIG. 3, when the average temperature of A, B, and C < the average temperature of D, E, and F < the average temperature of G, H, and I, the fan control unit 6 is configured to rotate the blower fan 31 in reverse to blow air from a lower side toward an upper side of the trolley 4.

The switching control between forward rotation and reverse rotation may be carried out not only when the magnitude relationship among the respective average temperatures satisfies a predetermined switching condition, but also when the difference among the respective average temperatures is equal to or greater than a predetermined threshold temperature. For example, it is conceivable to switch from forward rotation to reverse rotation when the average temperature of A, B, and C < the average temperature of D, E, and F < the average temperature of G, H, and I, and the average temperature of G, H, and I is higher than the average temperature of A, B, and C by at least a predetermined threshold temperature.

Furthermore, the fan control unit 6 can also control a rotational speed of the blower fan 31 in forward rotation or a rotational speed of the blower fan 31 in reverse rotation based on the magnitude relationship among the respective average temperatures or the difference among the respective average temperatures.

### <Effects of the present embodiment>

According to the incubator 100 of the present embodiment, by changing the rotation direction of the blower fan 31 by the fan control unit 6 to change the airflow direction in the air flow path, it is possible to reduce the temperature difference in the casing 2 caused by the installation positions of the trays 10, heat generated by eggs being incubated, and the like, thereby making the temperature in the casing 2 more uniform. As a result, the timing at which fertilized eggs hatch in the incubator 100 can be synchronized, and work efficiency can be improved.

### <Modified embodiment of the present invention>

Note that the present invention is not limited to the above-described embodiments.

For example, in the above-described embodiment, the blower fan 31 is arranged between the two trolleys 4 in the incubation chamber 2S, but the arrangement position of the blower fan 31 is not limited to this position, and the blower fan may be arranged outside the plurality of trolleys 4 in the incubation chamber 2S, or may be arranged in a space such as an air flow path formed separately from the incubation chamber 2S.

In the above-described embodiment, the temperature sensors 5 are provided in three zones in the up-and -down direction (an upper portion, an up-and -down central portion, and a lower portion). However, the temperature sensors 5 may be provided in two zones in the up-and-down direction (for example, an upper portion and a lower portion), or may be provided in four or more zones in the up-and-down direction. Here, when the temperature sensors 5 are provided in two zones in the up-and-down direction (for example, an upper portion and a lower portion), the temperature of an up-and-down central portion of the trolley 4 may be estimated from temperatures detected by the upper temperature sensors 51 and the lower temperature sensors 52, and the estimated temperature may be used for switching control of the blower fan 31.

Furthermore, in the above embodiment, the plurality of temperature sensors 5 are provided in each part in the up-and-down direction, but at least one temperature sensor 5 may be provided in each part in the up-and-down direction.

In addition, the blower fan 31 may be switched between forward rotation and reverse rotation using other parameters such as time without using temperatures detected by the temperature sensors 5. When switching the blower fan 31 between forward rotation and reverse rotation using time, it is conceivable to set in advance the time for forward rotation and the time for reverse rotation of the blower fan 31 and periodically switch between forward rotation and reverse rotation. The time for forward rotation and the time for reverse rotation may be changed according to the elapsed time (days) from the start of incubation.

The present invention is not limited to the above-described embodiment, and various modifications may be made without departing from the spirit of the present invention.

### Industrial Applicability

The present invention can be used to reduce the temperature difference in the casing caused by the installation positions of trays, heat generated by eggs being incubated, and the like, thereby making the temperature in the casing more uniform.

### Reference Signs List

- 100: incubator
- 10: tray
- 2: casing
- 31: blower fan
- 4: trolley
- 5: temperature sensor
- 6: fan control unit

## Claims

1. An incubator comprising:
a casing configured to accommodate a plurality of trays accommodating fertilized eggs;
a blower fan provided in the casing; and
a fan control unit configured to change an airflow direction in an air flow path by switching the blower fan between forward rotation and reverse rotation.

2. The incubator according to claim 1, further comprising
a plurality of temperature sensors provided in the casing,
wherein the fan control unit is configured to switch the blower fan between forward rotation and reverse rotation based on temperatures detected by the plurality of temperature sensors.

3. The incubator according to claim 2, wherein the plurality of temperature sensors include sensors provided at at least two locations on upstream and downstream sides of the air flow path when the blower fan is rotated forward.

4. The incubator according to claim 2 or 3, wherein the fan control unit is configured to switch the blower fan between forward rotation and reverse rotation based on a difference among temperatures detected by the plurality of temperature sensors.
